# EUROPEAN PATENT SPECIFICATION

(11) **EP 0 418 963 B1**
(45) Date of publication and mention of the grant of the patent: **06.07.1994**
(21) Application number: 90202447.0
(22) Date of filing: 17.09.1990
(51) Int. Cl.: F16C 33/10, B21D 17/04, F16C 33/14

(54) **Device for manufacturing a groove bearing, and method of manufacturing a groove bearing by means of the device**
Vorrichtung zum Herstellen eines Rillenlagers sowie Verfahren zum Herstellen eines Rillenlagers unter Verwendung der Vorrichtung
Dispositif de fabrication d'un palier à rainures et procédé de fabrication d'un palier à rainures, utilisant ce dispositif

(30) Priority: 21.09.1989 NL 8902357
(43) Date of publication of application: 27.03.1991
(73) Proprietor: Philips Electronics N.V., 5621 BA Eindhoven (NL)
(72) Inventor: Lucier Pieter Andreas Jozias, NL-5656 AA Eindhoven (NL)
(74) Representative: Schrijnemaekers, Hubert Joannes Maria

(56) References cited:
- EP-A- 0 002 292
- WO-A-89/10491
- FR-A- 1 594 523

## Description

The invention relates to a device for manufacturing a groove bearing comprising a bearing shaft and a bearing bush having cooperating bearing surfaces, of which at least one bearing surface is formed with a pattern of pumping grooves, which device comprises a hard pin around which, or a hard sleeve in which, a cage is arranged which has an annular pattern of holes which are concentric with the pin or sleeve and in which hard balls are provided which project from the cage and bear against a bearing surface of the pin or sleeve, the pin or sleeve and the cage being rotatable relative to each other.

The invention further relates to a method of manufacturing a groove bearing.

The device defined above and a method to be carried out by means of the device are known from EP-A 0,002,292. The prior-art device is suitable for carrying out a method of manufacturing a hydrodynamic groove bearing comprising a bearing shaft and a bearing bush, which form cooperating surfaces, of which at least one surface is formed with at least one pattern of shallow lubricant pumping grooves. Such a hydrodynamic bearing is described in, for example, GB-A 1,022,391 and in GB-A 1,163,018.

The prior-art device comprises a hard pin around which, or a hard sleeve in which, a cylindrical cage is arranged which has one or more annular patterns of holes which are arranged symmetrically about the central axis of the cage and which are engaged by hard balls having a diameter larger than the wall thickness of the cage. The cage and the pin or sleeve are each coupled to a drive arrangement capable of impressing a translation and a rotation upon the cage and the pin or sleeve. Thus, in carrying out the prior-art method the assembly comprising the pin or sleeve, the cage and the balls is translated and rotated relative to a bearing bush and a bearing shaft respectively, the balls bearing against the pin or the sleeve and being impressed into the softer material of the bearing bush and the bearing shaft respectively to form grooves therein.

It has been found that in carrying out the prior-art method the pin or the sleeve of the prior-art device is subjected to substantial wear as a result of large Hertzian stresses produced at the contact surfaces between the pin or sleeve and the balls. The wear manifests itself particularly as deformations of the pin or sleeve surfaces facing the cage, so that the contact surface of the pin or the sleeve becomes irregular, resulting in an inaccurate groove depth. In addition, this leads to a substantial wear of the balls.

It is an object of the invention to improve the device defined in the opening paragraph so as to minimize said wear.

To this end the device in accordance with the invention is characterized in that the bearing surface of the pin or sleeve is constituted by a groove bottom of a continuous groove which is concentric with the central axis of the pin or sleeve, the groove bottom extending in a longitudinal sectional plane of the pin or sleeve, which plane contains the central axis, as an arc of a circle whose radius is at least equal to the radius of the balls.

In the device in accordance with the invention the surface pressure at the contact surfaces of the pin or sleeve and the balls is kept within permissible limits, so that the device enables reproducible groove bearings with a high long-term accuracy to be manufactured. If required, the cage of the device may have several annular patterns of holes.

An embodiment of the device in accordance with the invention, in which the balls can sustain large forces for a long time, is characterized in that the balls have been compressed isostatically.

It is another object of the invention to provide a simple method which can be implemented by means of the device in accordance with the invention.

The method in accordance with the invention, which employs the device in accordance with the invention, which device comprises a hard pin around which, or a hard sleeve in which, a cage provided with hard balls is arranged, is characterized in that exclusively the cage or the pin or sleeve is driven to be translated and rotated. This means that if the cage is driven the pin or sleeve performs exclusively secondary movements derived from the cage movements, and if the pin or sleeve is driven the cage performs exclusively secondary movements derived from the movements of the pin or sleeve. This method simply ensures a favourable hobbing movement of the balls.

The invention will now be described in more detail, by way of example with reference to the drawing in which
Figure 1 shows diagrammatically and not to scale a first embodiment f the device in accordance with the invention for forming a groove pattern in a bearing bush, and
Figure 2 shows diagrammatically and not to scale a second embodiment for forming a groove pattern in a bearing shaft.

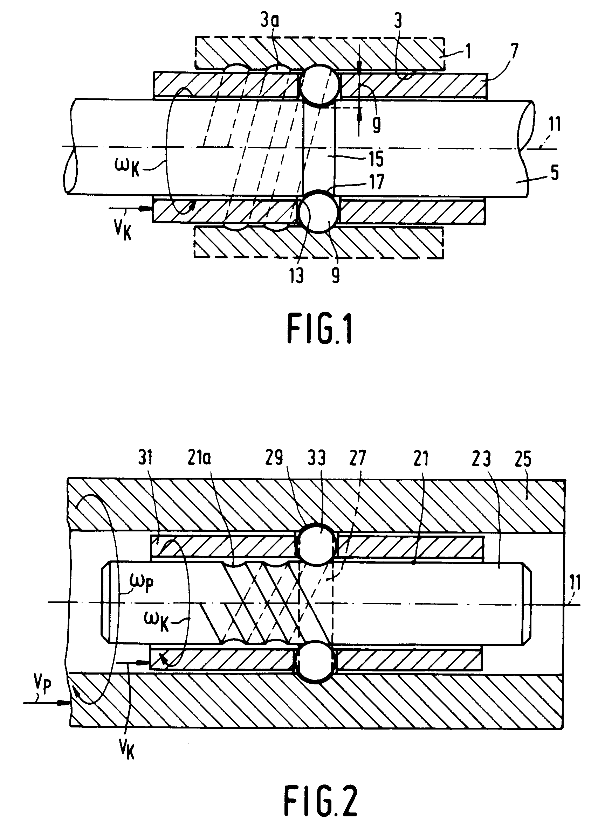

In Figure 1 the reference numeral 1 denotes a bearing bush of a hydrodynamic bearing, whose inner surface 3 should be formed with a groove pattern 3a. The bearing bush 1 is immobilized by means, not shown. An assembly comprising a hard pin 5, a cylindrical cage 7 and hardened isostatically compressed metal balls is arranged in the bearing bush. The balls 9 engage in holes 13 formed in the cage 7 in an annular pattern which is symmetrical about the central axis 11. The pin 5 has a concentric groove 15 whose groove bottom 17 serves as a bearing surface for the balls 9 and has the shape of an arc of circle viewed in the sectional planes of the pin 5 which contain the central axis 11, the plane of the drawing being one of these planes, the radius of the circle comprising said arc of circle being equal to the radius cf the spherical balls 9. The balls 9 have a diameter which is so much larger than the maximum clearance g between the bearing bush 1 and the bottom 17 of the groove in the pin 5 that the desired groove depth can be obtained. The cage 7 is coupled to a drive arrangement, not shown, which is known per se and which is capable of impressing a translational movement vₖ and a rotational movement ωₖ on the cage 7. Since the balls 9 partly engage in the groove 15 the movements of the cage 7 also cause the pin 5 to be moved. Thus, the assembly comprising the pin, the cage and the balls is translated and rotated through the bearing bush 1, the balls rolling along the bottom 17 of the groove in the pin 5 and along the inner surface 3 of the bearing bush 1, thereby causing bearing grooves to be formed in the softer material of the bearing bush 1. The number of helical bearing grooves thus formed corresponds to the number of balls used. The pitch of these grooves depends on the ratio between the translational movement vₖ and the rotational movement ωₖ of the cage 7. Thus, by varying this ratio grooves of varying pitch can be obtained. In order to form a herringbone pattern the direction of rotation should be reversed upon completion of a specific travel.

In the situation illustrated in Figure 1 the cage 7 is driven but it is also possible to drive the pin 7, the secondary movements being performed by the cage 7.

Figure 2 shows how bearing grooves 21a can be formed in an outer surface 21 of a bearing shaft 23. The device shown comprises a hardened cylindrical sleeve 25 with a continuous groove 27 whose groove bottom 29 serves as a bearing surface for a plurality of balls 33 arranged in a cage 31. Similarly to the cage 7 in the above example the cage 31 is coupled to a drive arrangement, the secondary movements vₚ and wₚ being performed by the sleeve 25.

For completeness'sake it is to be noted that the invention is not limited to the emdbodiments disclosed herein. For example. the cage may have several annular patterns of holes and the pin or sleeve may have a corresponding number of grooves.

## Claims

1. A device for manufacturing a groove bearing, comprising a bearing shaft and a bearing bush having cooperating bearing surfaces, of which at least one bearing surface is formed with a pattern of pumping grooves, which device comprises a hard pin (5) around which, or a hard sleeve (25) in which, a cage (7, 31) is arranged which has an annular pattern of holes (13) which are concentric with said pin or sleeve and in which hard balls (9, 33) are provided, which project from the cage and bear against a bearing surface of the pin or sleeve, the pin or sleeve and the cage being rotatable relative to each other, characterized in that the bearing surface of the pin or sleeve is constituted by a groove bottom (17, 29) of a continuous groove (15, 27) which is concentric with the central axis (11) of the pin or sleeve, the groove bottom extending in a longitudinal sectional plane of the pin or sleeve, which plane contains the central axis, as an arc of a circle whose radius is at least equal to the radius of the balls.

2. A device as claimed in Claim 1, characterized in that the balls (9, 33) have been compressed isostatically.

3. A method of manufacturing a groove bearing by means of the device as claimed in Claim 1 or 2, which device comprises a hard pin (5) around which, or a hard sleeve (25) in which, a cage (7, 31) provided with hard balls (9, 33) is arranged, characterized in that exclusively the cage or the pin or sleeve is driven to be translated and rotated.

## Patentansprüche

1. Vorrichtung zum Herstellen eines eine Lagerachse und eine Lagerbüchse umfassenden Rillenlagers mit zusammenarbeitenden Lagerflächen, von denen mindestens eine mit mindestens einem Pumprillenmuster versehen ist, wobei diese Vorrichtung einen harten Stift (5) oder eine harte Büchse (25) aufweist, um den bzw. in der ein Käfig (7, 31) vorgesehen ist, der mit mindestens einem gegenüber dem Stift bzw. der Büchse konzentrisch vorgesehenen Kranz von Löchern (13) versehen ist, in denen sich aus dem Käfig herausragende harte Kugeln (9, 33) befinden, die sich an einer Kontaktfläche des Stiftes bzw. der Büchse abstützen, wobei der Stift bzw. die Büchse und der Käfig gegenüber einander drehend verlagerbar sind, dadurch gekennzeichnet, daß die Kontakfläche des Stiftes bzw. der Büchse durch einen Rillenboden (17, 29) einer gegenüber der Mittellinie (11) des Stiftes bzw. der Büchse konzentrisch vorgesehenen umlaufenden Rille (15, 27) gebildet ist, wobei sieh der Rillenboden in einer die Mittellinie aufweisenden Längsschnittebene des Stiftes bzw. der Büchse wie ein Bogen eines Kreises mit einem Radius, der dem der Kugeln wenigstens entspricht, erstreckt.

2. Vorrichtung nach Anspruch 1, dadurch gekennzeichnet, daß die Kugeln isostatisch zusammengepreßt sind.

3. Verfahren mm Herstellen eines Rillenlagers mittels der Vorrichtung nach Anspruch 1 oder 2, wobei diese Vorrichtung einen harten Sifte (5) bzw. eine harte Büchse (25) aufweist, um den bzw. in der ein Käfig (7, 31) mit harten Kugeln (9, 33) vorgesehen ist, dadurch gekennzeichnet, daß nur der Käfig oder der Stift bzw. die Büchse zum Durchführen einer geradlinien und einer Drehbewegung angetrieben wird.

## Revendications

1. Dispositif de fabrication d'un palier à rainures comportant un arbre de palier et un coussinet présentant des surfaces d'appui qui coopèrent et dont au moins l'une est pourvue d'une configuration de rainures de pompage, dispositif comportant, soit une tige dure (5) entourée d'une cage (7, 31) ou un manchon dur (25) enfermant cette cage, cage présentant une configuration annulaire de trous (13) concentriques avec ladite tige ou ledit manchon et dans lesquels sont placées des billes dures (9, 33) faisant saillie de la cage et s'appuyant contre une surface d'appui de la tige ou du manchon, la tige ou le manchon et la cage pouvant tourner les uns par rapport aux autres, caractérisé en ce que la surface d'appui de la tige ou du manchon est constituée par un fond (17, 29) de rainure continue (15, 27) concentrique avec l'axe central (11) de la tige ou du manchon, fond de rainure qui, dans un plan de section longitudinale de la tige ou du manchon dans lequel est situé l'axe central, s'étend suivant un arc de cercle dont le rayon est au moins égal au rayon des billes.

2. Dispositif selon la revendication 1, caractérisé en ce que les billes (9, 33) sont comprimées par voie isostatique.

3. Procédé de fabrication d'un palier à rainures au moyen du dispositif selon la revendication 1 ou 3, dispositif comportant une tige dure (5) entourée d'une cage (7, 31) pourvue de billes dures (9, 33) ou un manchon dur (25) enfermant cette cage, caractérisé en ce qu'uniquement la cage ou uniquement la tige ou le manchon est animé de mouvements de translation et de rotation.
